# EUROPEAN PATENT APPLICATION

(11) **EP 3 276 467 A1**
(43) Date of publication of application: **31.01.2018**
(21) Application number: 15832671.0
(22) Date of filing: 30.07.2015
(51) Int. Cl.: G06F 3/044

(54) **IN-CELL CAPACITIVE TOUCH DISPLAY SCREEN, DISPLAY PANEL AND DISPLAY DEVICE**

(30) Priority: 24.03.2015 CN 201510131894
(71) Applicant: BOE Technology Group Co., Ltd., Beijing 100015 (CN); Beijing BOE Optoelectronics Technology Co., Ltd., Beijing 100176 (CN)
(72) Inventor: QU, Lianjie, Beijing 100176 (CN); YANG, Li, Beijing 100176 (CN)
(74) Representative: Isarpatent
(86) International application number: PCT/CN2015/085592
(87) International publication number: WO 2016/150059

(57) **Abstract**

The present disclosure provides an in-cell capacitive touch panel, a display panel and a display device, so as to solve the problem in the related art where it is impossible to provide sufficient room for a touch IC at an IC pad. The in-cell capacitive touch panel includes a touch region and an IC pad. Multiple driving lines and multiple sensing lines intersecting each other are arranged at the touch region. Each sensing line is configured to receive a touch sensing signal, and each driving line is provided with a touch driving signal by a corresponding shift register at the touch region.

## Description

### CROSS-REFERENCE TO RELATED APPLICATION

The present application claims a priority to the Chinese Patent Application No. 201510131894.2 filed on March 24, 2015, the disclosure of which is incorporated in its entirety by reference herein.

### TECHNICAL FIELD

The present disclosure relates to the field of touch display technology, in particular to an in-cell capacitive touch panel, a display panel and a display device.

### BACKGROUND

Touch panels, depending on their compositions and structures, may include Add-on touch panels, On-Cell touch panels, and In-Cell touch panels. For the Add-on touch panel, a touch panel and a liquid crystal display (LCD) are produced separately and then adhered together to form a liquid crystal display having a touch function. Add-on touch panel has relatively high production cost, relatively low light transmittance and relatively large module thickness. For On-Cell touch panel, it also has a relatively large module thickness. For the capacitive In-Cell touch panel, its touch driving electrodes are built in the liquid crystal display, and a touch sensing circuit is implemented within a cell. As compared with the other kinds of touch panels, the capacitive In-Cell touch panel may have a thinner and lighter module as well as lower production cost.

For the Add-on touch panel and On-Cell touch panel, driving lines and sensing lines are formed on a separate substrate, on which a corresponding touch Integrated circuit (IC) is also formed. With this structure, it is able to reduce the influence on a panel Integrated circuit (IC Pad). For the In-Cell Touch Panel, additional driving lines and sensing lines are directly provided on a Thin Film Transistor (TFT) array substrate, and the touch IC is arranged at the IC Pad. Since a majority region of the IC Pad has already been occupied by a display IC (e.g., a source driving IC and a gate driving IC), there is no sufficient room at the IC Pad for the touch IC.

### SUMMARY

An object of the present disclosure is to provide an in-cell capacitive touch panel, a display panel and a display device, so as to solve the problem in the related art where it is impossible to provide sufficient room for the touch IC at the IC pad.

In one aspect, the present disclosure provides in some embodiments an in-cell capacitive touch panel, including a touch region and an IC pad. Multiple driving lines and multiple sensing lines intersecting each other are arranged at the touch region, each sensing line is configured to receive a touch sensing signal, and each driving line is provided with a touch driving signal by a shift register at the touch region.

According to the embodiments of the present disclosure, each driving line is provided with the touch driving signal by the corresponding shift register at the touch region, and it is unnecessary to arrange a touch IC at the IC pad. As a result, it is able to solve the problem in the related art where it is impossible to provide sufficient room for the touch IC.

Alternatively, more than one shift registers are arranged at the touch region, and each shift register is provided with a touch clock signal by a signal generator at the IC pad.

Alternatively, the signal generator is further configured to provide a clock signal for a display driving circuit, each driving line is connected to the signal generator via a clock adjustment unit, and the touch clock signal is acquired by adjusting a sequence of the clock signals from the signal generator through the clock adjustment unit and provided to each shift register. In the embodiments of the present disclosure, the signal generator for providing the clock signal to the display driving circuit is multiplexed, so it is unnecessary to arrange separately the signal generator for providing the touch clock signal in the in-cell capacitive touch panel. As a result, it is able to solve the problem in the related art where it is impossible to provide sufficient room for the touch IC at the IC pad.

Alternatively, the signal generator is arranged at the IC pad and further configured to provide a clock signal for a display driving circuit. Each shift register is further configured to provide a display driving signal. Each driving line is connected to the shift register via a signal adjustment unit, and the touch driving signal is acquired by adjusting a sequence of the display driving signals from the shift registers through the signal adjustment unit and provided to the driving lines. In the embodiments of the present disclosure, the shift registers in the display driving circuit are multiplexed, so it is unnecessary to arrange the shift registers in the in-cell capacitive touch panel for providing the touch driving signals and arrange the touch IC at the IC pad. As a result, it is able to solve the problem in the related art where it is impossible to provide sufficient room for the touch IC at the IC pad, and to provide the in-cell capacitive touch panel with a narrow bezel.

Alternatively, a plurality of the shift registers is arranged at one side of the touch region and each driving line is connected at one end to a corresponding shift register, or a plurality of the shift registers is arranged at both sides of the touch region and each driving line is connected at both ends to corresponding shift registers at both sides of the touch region. In the embodiments of the present disclosure, the shift registers may be arranged at one or both sides of the touch region, so as to achieve single-side driving or double-side driving.

According to the embodiments of the present disclosure, each driving line is provided with the touch driving signal by the corresponding shift register at the touch region, and it is unnecessary to arrange a touch IC at the IC pad. As a result, it is able to solve the problem in the related art where it is impossible to provide sufficient room for the touch IC.

In another aspect, the present disclosure provides in some embodiments a display panel including the above-mentioned in-cell capacitive touch panel.

According to the embodiments of the present disclosure, each driving line is provided with the touch driving signal by the corresponding shift register at the touch region, and it is unnecessary to arrange a touch IC at the IC pad. As a result, it is able to solve the problem in the related art where it is impossible to provide sufficient room for the touch IC.

In yet another aspect, the present disclosure provides in some embodiments a display device including the above-mentioned display panel.

According to the embodiments of the present disclosure, each driving line is provided with the touch driving signal by the corresponding shift register at the touch region, and it is unnecessary to arrange a touch IC at the IC pad. As a result, it is able to solve the problem in the related art where it is impossible to provide sufficient room for the touch IC.

### BRIEF DESCRIPTION OF THE DRAWINGS

In order to illustrate the technical solutions of the present disclosure or the related art in a clearer manner, the drawings desired for the present disclosure or the related art will be described hereinafter briefly. Obviously, the following drawings merely relate to some embodiments of the present disclosure, and based on these drawings, a person skilled in the art may obtain the other drawings without any creative effort.
Fig.1 is a schematic view showing an in-cell capacitive touch panel according to one embodiment of the present disclosure;
Fig.2 is another schematic view showing the in-cell capacitive touch panel according to one embodiment of the present disclosure; and
Fig.3 is yet another schematic view showing the in-cell capacitive touch display according to one embodiment of the present disclosure.

### DETAILED DESCRIPTION OF THE EMBODIMENTS

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

Unless otherwise defined, any technical or scientific term used herein shall have the common meaning understood by a person of ordinary skills. Such words as "first" and "second" used in the specification and claims are merely used to differentiate different components rather than to represent any order, number or importance. Similarly, such words as "one" or "one of" are merely used to represent the existence of at least one member, rather than to limit the number thereof. Such words as "connect" or "connected to" may include electrical connection, direct or indirect, rather than to be limited to physical or mechanical connection. Such words as "on", "under", "left" and "right" are merely used to represent relative position relationship, and when an absolute position of the object is changed, the relative position relationship will be changed too.

### First Embodiment

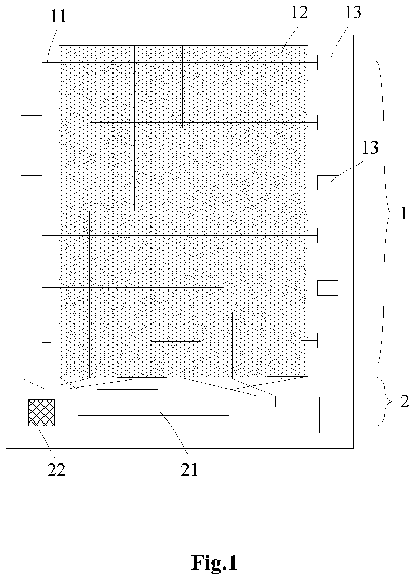

As shown in Fig.1, the present disclosure provides in this embodiment an in-cell capacitive touch panel, which includes a touch region 1 and an IC pad 2. A panel IC 21 is arranged at the IC pad 2. Multiple driving lines 11 and multiple sensing lines 12 intersecting each other are arranged at the touch region 1, each sensing line 12 is configured to receive a touch sensing signal, and each driving line 11 is provided with a touch driving signal by a shift register 13 at the touch region 1. One or more shift registers are provided. In addition, a clock signal generator 22 similar to a conventional one in the art is provided, and thus it is not particularly defined herein. According to the embodiment, each driving line 11 is provided with the touch driving signal by the corresponding shift register 13 at the touch region 1, and it is unnecessary to arrange a touch IC at the IC pad 2. As a result, it is able to solve the problem in the related art where it is impossible to provide sufficient room for the touch IC at the IC pad 2.

In the in-cell capacitive touch panel in Fig.1, each shift register 13 is merely configured to provide the touch driving signal, i.e., the shift registers 13 for the touch IC are directly arranged at the touch region 1, and the components of the touch IC which are integrated in the related art are arranged separately. As a result, it is able to save the room of the IC pad 2.

### Second Embodiment

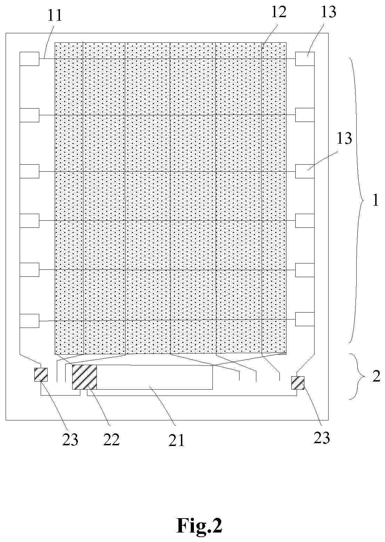

As shown in Fig.2, the present disclosure provides in this embodiment an in-cell capacitive touch panel, which includes a touch region 1 and an IC pad 2. A panel IC 21 is arranged at the IC pad 2. Multiple driving lines 11 and multiple sensing lines 12 intersecting each other are arranged at the touch region 1, each sensing line 12 is configured to receive a touch sensing signal, and each driving line is provided with a touch driving signal by a corresponding shift register 13 at the touch region 1.

Alternatively, a signal generator 22 is arranged at the IC pad 2 and it is further configured to provide a clock signal for a display driving circuit. Each driving line 11 is connected to the signal generator 22 via a clock adjustment unit 23. A touch clock signal is acquired by adjusting a sequence of the clock signals from the signal generator 22 through the clock adjustment unit 23 and provided to the corresponding shift register 13.

According to the embodiment of the present disclosure, the signal generator for providing the clock signal to the display driving circuit is multiplexed, so it is unnecessary to arrange separately the signal generator for providing the touch clock signal in the in-cell capacitive touch panel. As a result, it is able to solve the problem in the related art where it is impossible to provide sufficient room for the touch IC at the IC pad.

### Third Embodiment

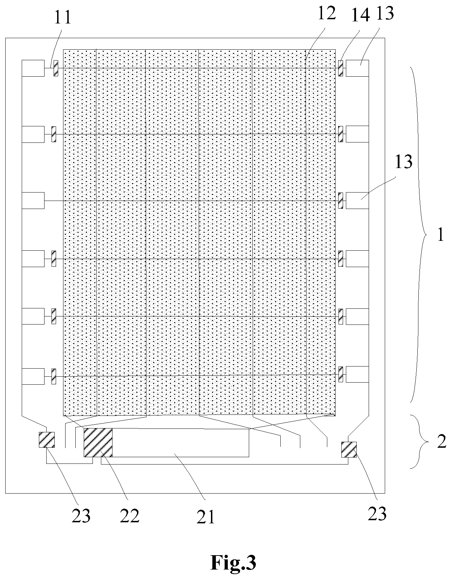

As shown in Fig.3, the present disclosure provides in this embodiment an in-cell capacitive touch panel, which includes a touch region 1 and an IC pad 2. A panel integrated circuitIC21 is arranged at the IC pad 2. Multiple driving lines 11 and multiple sensing lines 12 intersecting each other are arranged at the touch region 1, each sensing line 12 is configured to receive a touch sensing signal, and each driving line 11 is provided with a touch driving signal by a corresponding shift register 13 at the touch region 1.

A signal generator 22 is arranged at the IC pad 2 and configured to provide a clock signal for a display driving circuit. Each driving line 11 is connected to the signal generator 22 via a clock adjustment unit 23. A touch clock signal is acquired by adjusting a sequence of the clock signals from the signal generator 22 through the clock adjustment unit and then provided to the corresponding shift register 13. Each shift register is further configured to provide a display driving signal. Each driving line 11 is connected to the corresponding shift register 13 via a signal adjustment unit 14. The touch driving signal is acquired by adjusting a sequence of the display driving signals from the shift registers through the signal adjustment unit 14 and then provided to the driving line 11.

According to the embodiment of the present disclosure, each shift register 13 in the display driving circuit and the signal generator 22 for providing the clock signal to the display driving circuit are multiplexed, so it is unnecessary to arrange separately the shift registers 13 for providing the touch driving signals and the signal generator 22 for providing the touch clock signals in the in-cell capacitive touch panel. As a result, it is able to solve the problem in the related art where it is impossible to provide sufficient room for the touch IC at the IC pad, and to provide the in-cell capacitive touch panel with a narrow bezel.

It should be appreciated that, in the in-cell capacitive touch panel according to the above embodiments, the shift registers 13 may be arranged at a side or both sides of the touch region 1, so as to achieve single-side driving or double-side driving. As shown in Figs.1-3, multiple shift registers 13 are arranged at both sides of the touch region 1, and each driving line 11 is connected at both ends to corresponding shift registers 13 at both sides of the touch region 1. Of course, the present disclosure is not limited thereto, and the multiple shift registers 13 may be arranged at one side of the touch region 1 in accordance with the practical needs. Each driving line 11 is connected at one end to a corresponding shift register 13. This structure is merely the modification to the in-cell capacitive touch panel in Figs.1-3, and thus it is not particularly defined herein.

### Fourth Embodiment

The present disclosure provides in this embodiment a display panel including the above-mentioned in-cell capacitive touch panel. The other components of the display panel are known in the art, and thus will not be particularly defined herein.

According to the embodiment of the present disclosure, each driving line is provided with the touch driving signal by the corresponding shift register at the touch region, and it is unnecessary to arrange a touch IC at the IC pad. As a result, it is able to solve the problem in the related art where it is impossible to provide sufficient room for the touch IC.

### Fifth Embodiment

The present disclosure provides in this embodiment a display device including the above-mentioned display panel. The structure and working principle of the display panel included in the display device are identical to those mentioned in the above embodiments. The other components of the display device are known in the art and thus will not be particularly defined herein. The display device may be any product or member having a display function included in such devices as household appliances, telecommunications devices, engineering devices and electronic entertainment devices.

According to the embodiments of the present disclosure, each driving line is provided with the touch driving signal by the corresponding shift register at the touch region, and it is unnecessary to arrange a touch IC at the IC pad. As a result, it is able to solve the problem in the related art where it is impossible to provide sufficient room for the touch IC.

The above are merely the preferred embodiments of the present disclosure. A person skilled in the art may make further modifications and improvements without departing from the principle/spirit of the present disclosure, and these modifications and improvements shall also fall within the scope of the present disclosure.

## Claims

1. An in-cell capacitive touch panel, comprising a touch region and an integrated circuit (IC) pad, wherein a plurality of driving lines and a plurality of sensing lines intersecting each other are arranged at the touch region, each sensing line is configured to receive a touch sensing signal, and each driving line is provided with a touch driving signal by a shift register at the touch region.

2. The in-cell capacitive touch panel according to claim 1, wherein more than one shift registers are arranged at the touch region, and each shift register is provided with a touch clock signal by a signal generator at the IC pad.

3. The in-cell capacitive touch panel according to claim 2, wherein the signal generator is further configured to provide a clock signal for a display driving circuit, each driving line is connected to the signal generator via a clock adjustment unit, and the touch driving signal is acquired by adjusting a sequence of the clock signals from the signal generator through the clock adjustment unit and provided to the corresponding shift register.

4. The in-cell capacitive touch panel according to claim 1, wherein a signal generator is arranged at the IC pad and further configured to provide a clock signal for a display driving circuit, the shift register is further configured to provide a display driving signal, each driving line is connected to the shift register via a signal adjustment unit, and the touch driving signal is acquired by adjusting a sequence of the display driving signals from the shift registers through the signal adjustment unit and provided to the driving lines.

5. The in-cell capacitive touch panel according to any one of claims 1 to 4, wherein a plurality of shift registers is arranged at one side of the touch region, each driving line is connected at one end to a corresponding shift register; or a plurality of shift registers is arranged at both sides of the touch region, and each driving line is connected at both ends to corresponding shift registers at both sides of the touch region.

6. A display panel, comprising the in-cell capacitive touch panel according to any one of claims 1 to 5.

7. A display device, comprising the display panel according to claim 6.
